# EUROPEAN PATENT APPLICATION

(11) **EP 4 560 240 A1**
(43) Date of publication of application: **28.05.2025**
(21) Application number: 23211746.5
(22) Date of filing: 23.11.2023
(51) Int. Cl.: F28D 9/00, F28F 9/007, F28F 9/02, F28D 21/00, F28F 27/02

(54) **HEAT EXCHANGER MODULE**

(71) Applicant: Modine Manufacturing Company, Racine Wisconsin 53403 (US)
(72) Inventor: Grosskopf, Thomas, 72654 Neckartenzlingen (DE); Lippke, Frank, 70794 Filderstadt (DE); Bräuning, Thomas, 70186 Stuttgart (DE)
(74) Representative: Ter Meer Steinmeister & Partner

(57) **Abstract**

A heat exchanger module has a first heat exchanger, a second heat exchanger, and a mounting plate. The first heat exchanger has a low-pressure inlet, a low-pressure outlet, a high-pressure inlet, and a high-pressure outlet. The second heat exchanger is in fluid communication with the first heat exchanger and has a low-pressure inlet and a low-pressure outlet. The mounting plate is coupled to the first heat exchanger and the second heat exchanger. The mounting plate includes an opening which provides fluid communication between the low-pressure outlet of the second heat exchanger and the low-pressure inlet of the first heat exchanger. The mounting plate further includes a cross-over channel which connects the high-pressure outlet of the first heat exchanger to a high-pressure channel to dispense the high-pressure fluid from the first heat exchanger.

## Description

### BACKGROUND

The present invention relates to a heat exchanger module. More specifically, the present invention relates to a heat exchanger module for example for use in a thermal management system for an electric vehicle in one embodiment.

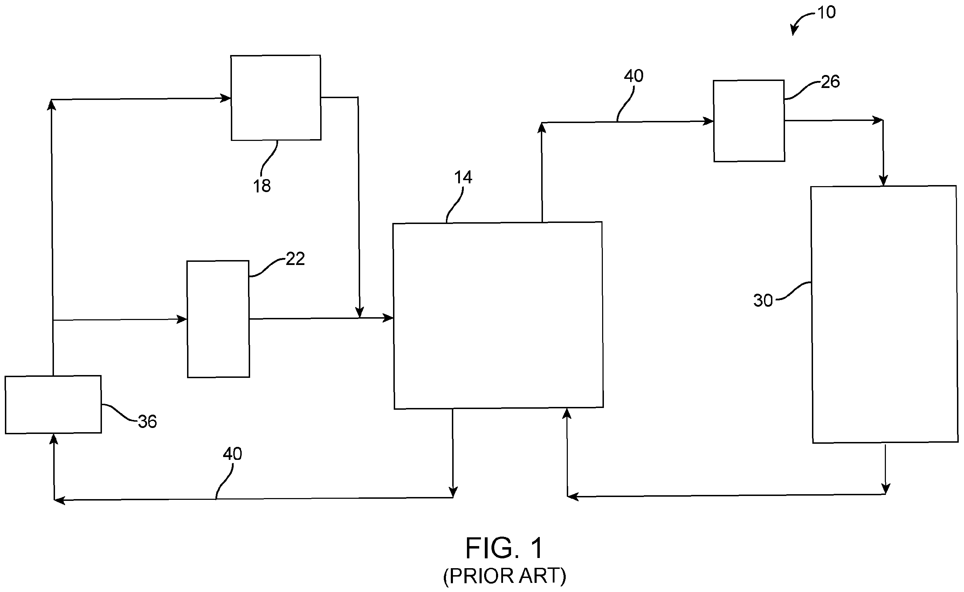

With reference to Fig. 1, a traditional thermal management system 10 is used in electric vehicles to cool the power train components (e.g., battery) of the vehicle and to provide cool air to the cabin. The traditional thermal management system 10 includes a heat exchanger 14, a chiller 18, a cabin evaporator 22, a compressor 26, a condenser 30, and at least one expansion valve 36. The components of the traditional thermal management system 10 are individually placed under the hood of the vehicle.

Lines 40 (e.g., pipes) connect the components and allow a fluid (e.g., a refrigerant) to flow through the traditional thermal management system 10. As the fluid flows through the traditional thermal management system 10, the fluid changes between a high-pressure state and a low-pressure state.

In the traditional thermal management system 10, the chiller 18 allows the low-pressure fluid to chill a second fluid (e.g., coolant) that is used to cool the battery. The cabin evaporator 22 allows the low-pressure fluid to chill an airflow that is used to chill the cabin. The compressor 26 increases the pressure of the fluid such that the fluid is in a high-pressure vapor state. The condenser 30 cools the fluid from the high-pressure vapor state into a liquid high-pressure state. The condenser 30 allows the fluid to be cooled by an airflow or alternatively a coolant flowing through the condenser 30. The expansion valve 36 expands the high-pressure fluid such that the high-pressure fluid is turned into a low-pressure fluid. The heat exchanger 14 allows heat to transfer between the low-pressure fluid and the high-pressure fluid. The thermal management system 10 may have a first expansion valve fluidly connected to the chiller 18 and a second expansion valve fully connected to the evaporator 22.

Aspects of the invention will become apparent by consideration of the detailed description and accompanying drawings.

### SUMMARY

The object is solved by the features of the independent claims. Preferred embodiments are given in the dependent claims.

According to an exemplary construction, the invention includes a heat exchanger module having a first heat exchanger, a second heat exchanger, and a mounting plate. The first heat exchanger is configured to transfer heat between a high-pressure fluid and a low-pressure fluid. The first heat exchanger has a low-pressure inlet configured to supply the low-pressure fluid to the first heat exchanger, a low-pressure outlet configured to connect to a low-pressure outlet line to dispense the low-pressure fluid from the first heat exchanger to a low-pressure outlet line, a high-pressure inlet configured to connect to a high-pressure line to supply the high-pressure fluid to the first heat exchanger, and a high-pressure outlet configured to dispense the high-pressure fluid from the first heat exchanger. The second heat exchanger is in fluid communication with the first heat exchanger and is operable to transfer heat between the low-pressure fluid and a second fluid flowing through the second heat exchanger. The second heat exchanger has a low-pressure inlet configured to connect to a low-pressure channel to supply the low-pressure fluid to the low-pressure inlet and a low-pressure outlet configured to dispense the low-pressure fluid from the second heat exchanger. The mounting plate is coupled to the first heat exchanger and the second heat exchanger. The mounting plate includes an opening. The opening provides fluid communication between the low-pressure outlet of the second heat exchanger and the low-pressure inlet of the first heat exchanger. The mounting plate further includes a cross-over channel extending along a portion of the mounting plate. The cross-over channel is configured to connect the high-pressure outlet of the first heat exchanger to a high-pressure channel to dispense the high-pressure fluid from the first heat exchanger.

According to another exemplary construction, the invention includes a heat exchanger module having a first heat exchanger and a second heat exchanger. The first heat exchanger is configured to transfer heat between a high-pressure fluid and a low-pressure fluid. The first heat exchanger has a low-pressure inlet configured to supply the low-pressure fluid to the first heat exchanger, a low-pressure outlet configured to connect to a low-pressure outlet line to dispense the low-pressure fluid from the first heat exchanger to a low-pressure outlet line, a high-pressure inlet configured to connect to a high-pressure inlet to supply the high-pressure fluid to the first heat exchanger, and a high-pressure outlet configured to dispense the high-pressure fluid from the first heat exchanger. The second heat exchanger is in fluid communication with the first heat exchanger and is operable to transfer heat between the low-pressure fluid and a second fluid flowing through the second heat exchanger. The second heat exchanger has a low-pressure inlet configured to connect to a low-pressure channel to supply the low-pressure fluid to the low-pressure inlet and a low-pressure outlet in fluid communication with the low-pressure inlet of the first heat exchanger. The first heat exchanger is disposed on the second heat exchanger. The low-pressure inlet of the first heat exchanger and the low-pressure outlet of the second heat exchanger are aligned with each other.

The two aspects as mentioned above can be further combined with one or more of the following optional features.

In one or more of the embodiments, the mounting plate may be integrally formed with the second heat exchanger.

In one or more of the embodiments, the first heat exchanger may be removably coupled to the mounting plate.

In one or more of the embodiments, the first heat exchanger may further include an elastomer seal positioned between the mounting plate and the first heat exchanger.

In one or more of the embodiments, the mounting plate may further include a first plate and a second plate.

In one or more of the embodiments, the first plate may be adjacent the first heat exchanger,

In one or more of the embodiments, the second plate may be adjacent the second heat exchanger.

In one or more of the embodiments, the second plate may include the cross-over channel.

In one or more of the embodiments, the cross-over channel may extend along the mounting plate for at least a third of a length of the mounting plate.

In one or more of the embodiments, the heat exchanger module may further comprise a valve block coupled to the mounting plate and an expansion valve coupled to the valve block.

In one or more of the embodiments, the expansion valve may form at least part of the high-pressure channel.

In one or more of the embodiments, the cross-over channel and the valve block may provide fluid communication between the expansion valve and the high-pressure outlet of the first heat exchanger.

In one or more of the embodiments, the expansion valve may be in fluid communication with the low-pressure inlet of the second heat exchanger.

In one or more of the embodiments, the expansion valve may be configured to supply the low-pressure fluid to the low-pressure inlet of the second heat exchanger.

In one or more of the embodiments, the heat exchanger module may comprise a second expansion valve coupled to the valve block.

In one or more of the embodiments, the second expansion valve may be configured to connect to a line to dispense the low-pressure fluid from the heat exchanger module.

In one or more of the embodiments, the cross-over channel may include an inlet, a first outlet, and a second outlet.

In one or more of the embodiments, the inlet may be connected to the high-pressure outlet of the first heat exchanger.

In one or more of the embodiments, the first outlet may be connected to the expansion valve.

In one or more of the embodiments, the second outlet may be connected to the second expansion valve.

In one or more of the embodiments, the first heat exchanger may include a first end and a second end.

In one or more of the embodiments, the low-pressure inlet of the first heat exchanger and the high-pressure outlet of the first heat exchanger may be defined on the first end of the first heat exchanger.

In one or more of the embodiments, the low-pressure outlet of the first heat exchanger and the high-pressure inlet of the first heat exchanger may be defined on the second end of the first heat exchanger.

In one or more of the embodiments, the first end of the first heat exchanger may be adjacent the mounting plate.

In one or more of the embodiments, the first heat exchanger may include a first end having a first portion and a second portion.

In one or more of the embodiments, the low-pressure inlet of the first heat exchanger and the high-pressure outlet of the first heat exchanger may be defined on the first portion of the first end.

In one or more of the embodiments, the low-pressure outlet of the first heat exchanger and the high-pressure inlet of the first heat exchanger may be defined on the second portion of the first end.

In one or more of the embodiments, only the first portion of the first end may be disposed on to the mounting plate.

In one or more of the embodiments, the low-pressure outlet line may be an inlet to a compressor.

In one or more of the embodiments, the low-pressure inlet of the first heat exchanger and the low-pressure outlet of the second heat exchanger may be adjacent to each other.

In one or more of the embodiments, the heat exchanger module may further comprise a mounting plate coupled to the first heat exchanger and the second heat exchanger, the mounting plate including an opening, the opening provides fluid communication between the low-pressure inlet of the first heat exchanger and the low-pressure outlet of the second heat exchanger.

In one or more of the embodiments the low-pressure inlet of the first heat exchanger, the low-pressure outlet of the second heat exchanger, and the opening of the mounting plate may be aligned.

In one or more of the embodiments, the low-pressure inlet of the first heat exchanger, the low-pressure outlet of the second heat exchanger, and the opening of the mounting plate may be concentric.

In one or more of the embodiments, the heat exchanger module may further comprise a cross-over channel extending along a portion of the mounting plate.

In one or more of the embodiments, the cross-over channel may be configured to connect the high-pressure outlet of the first heat exchanger to a high-pressure channel to dispense the high-pressure fluid from the first heat exchanger, the cross-over channel having an inlet and outlet.

In one or more of the embodiments, the inlet of the cross-over channel may be aligned with the high-pressure outlet of the first heat exchanger.

In one or more of the embodiments, the inlet of the cross-over channel may be adjacent the high-pressure outlet of the first heat exchanger.

In one or more of the embodiments, the first heat exchanger may include a first end having a first portion and a second portion.

In one or more of the embodiments, the low-pressure inlet of the first heat exchanger and the high-pressure outlet of the first heat exchanger may be defined on the first portion of the first end.

In one or more of the embodiments, the low-pressure outlet of the first heat exchanger and the high-pressure inlet of the first heat exchanger may be defined on the second portion of the first end.

In one or more of the embodiments, only the first portion of the first end may be disposed on the second heat exchanger.

In one or more of the embodiments, the heat exchanger module may further comprise a valve block coupled to the second heat exchanger and an expansion valve coupled to the valve block.

In one or more of the embodiments, the expansion valve may form at least a portion a high-pressure channel.

In one or more of the embodiments, wherein the expansion valve may be in fluid communication with the low-pressure inlet of the second heat exchanger.

In one or more of the embodiments, the expansion valve may be configured to supply the low-pressure fluid to the low-pressure inlet of the second heat exchanger.

In one or more of the embodiments, the heat exchanger module may further comprise a sensor configured to connect to the low-pressure outlet line.

In one or more of the embodiments, the sensor may be mounted to the first heat exchanger.

In one or more of the embodiments, the low-pressure outlet line may be an inlet to a compressor.

### BRIEF DESCRIPTION OF THE DRAWINGS

FIG. 1 is schematic view of a prior art thermal management system.
FIG. 2 is schematic view of a thermal management system of one embodiment of the disclosure.

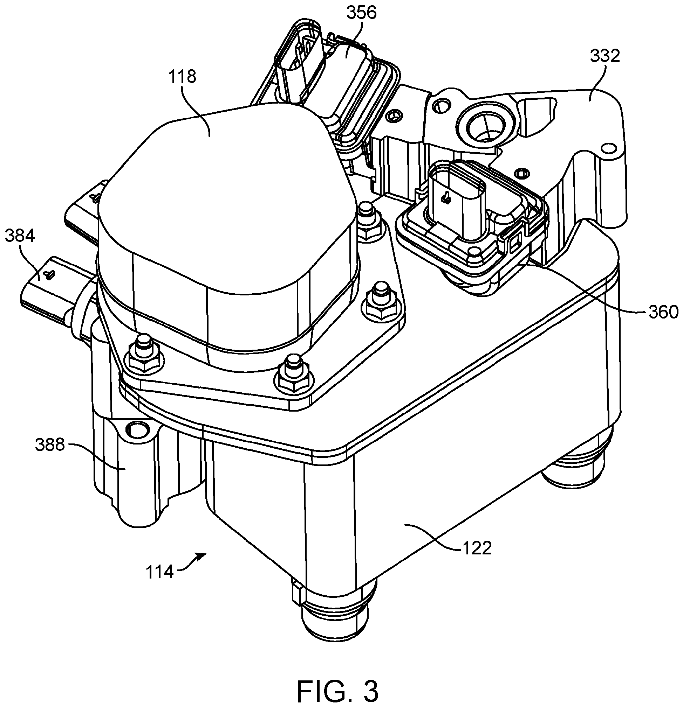

FIG. 3 is a perspective view of a heat exchanger module of one embodiment of the disclosure.

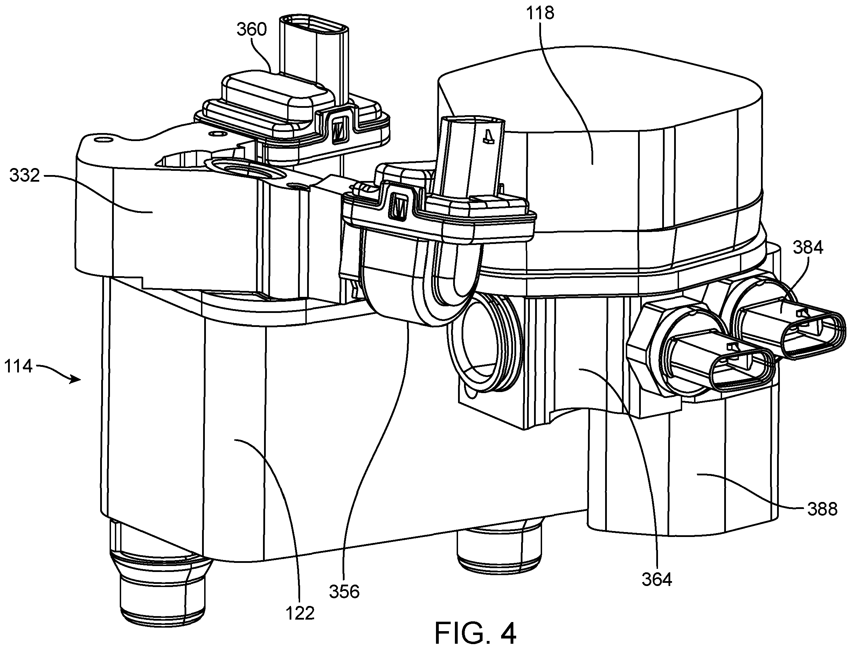

FIG. 4 is another perspective view of the heat exchanger module of FIG. 3.

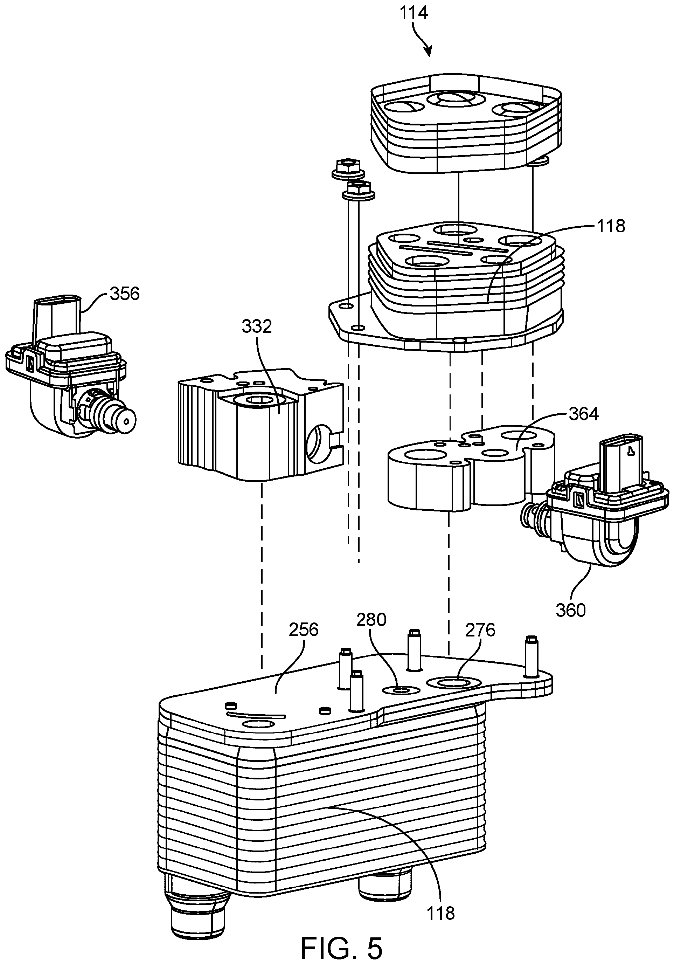

FIG. 5 is an exploded perspective view of the heat exchanger module of FIG. 3
FIG. 6 is a top perspective view of the heat exchanger of the heat exchanger module of FIG. 3 according to one embodiment of the disclosure.
FIG. 7 is a bottom perspective view of the heat exchanger of FIG. 6.
FIG. 8 is a section view of the heat exchanger of FIG. 6.
FIG. 9 is a front perspective view of the chiller of the heat exchanger module of FIG. 3 according to one embodiment of the disclosure.
FIG. 10 is a front perspective view of the chiller of FIG. 9 with a mounting plate.
FIG. 11 is a font perspective view of the chiller and mounting plate of FIG. 10 with the top plate of the mounting plate removed.
FIG. 12 is a section view of the chiller and mounting plate of FIG. 10.
FIG. 13 a top perspective view of the heat exchanger of FIG. 6 mounted to the chiller of FIG. 10.
FIG. 14 is a bottom perspective view of the heat exchanger and chiller of FIG. 13.
FIG. 15A is a section view of the heat exchanger of FIG. 14.
FIG. 15B is a detailed view of the section view of FIG. 15A.
FIG. 16A top view of the chiller and mount of FIG. 10 with a valve block of one embodiment.
FIG. 16B is a section view of FIG. 16A.
FIG. 17 is a section view of the chiller, mount, and valve block of FIG. 16A.

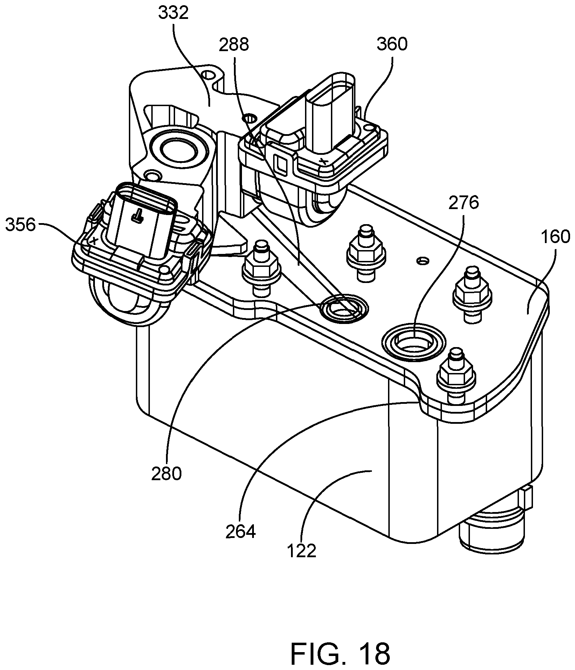

FIG. 18 perspective view of the chiller, mount, and valve block of FIG. 16A with expansion valves.
FIG. 19 is a perspective view of the heat exchanger of FIG. 6 coupled to a valve block according to one embodiment.
FIG. 20 is a perspective view of the heat exchanger and valve block of FIG. 19 with sensors.
FIG. 21 is a section view of the heat exchanger and valve block of FIG. 9.
FIG. 22 is another section view of the heat exchanger and valve block of FIG. 9.
FIG. 23 is a section view of the heat exchanger and valve block of FIG. 9 with a check valve according to one embodiment.
FIG. 24 is a section view of the heat exchanger, valve block, and check valve of FIG. 23.
FIG. 25 is a top perspective view of a heat exchanger module according to another embodiment.
FIG. 26 is a side perspective view of the heat exchanger module of FIG. 25.
FIG. 27 is a top view of the heat exchanger module of FIG. 25.
FIG. 28 is a back perspective view of the chiller, mounting plate, valve block, and expansion valves of the heat exchanger module of FIG. 25.
FIG. 29 is a back perspective view of the chiller and mounting plate of FIG. 25 with the top plate of the cover being transparent.
FIG. 30 is a perspective view of the heat exchanger, valve block, and check valve, of the heat exchanger module of FIG. 25.
FIG. 31 is a section view of the heat exchanger, valve block, and check valve of FIG. 30.
FIG. 32 is a top perspective view of a heat exchanger module according to another embodiment.
FIG. 33 is a top perspective view of a heat exchanger module of yet another embodiment.

### DETAILED DESCRIPTION

Before any constructions of the invention are explained in detail, it is to be understood that the invention is not limited in its application to the details of construction and the arrangement of components set forth in the following description or illustrated in the following drawings. The invention is capable of other constructions and of being practiced or of being carried out in various ways.

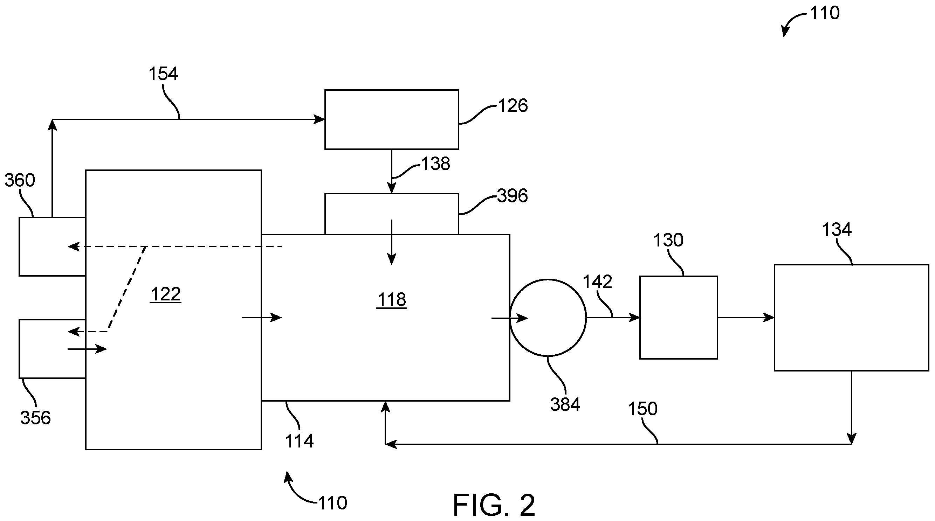

FIG. 2 illustrates a thermal management system 110 for example for use in an electric or hybrid vehicle in one application. The thermal management system 110 is more compact than the traditional thermal management system 10. The thermal management system 110 includes a heat exchanger module 114. The heat exchanger module 114 includes elements that are mounted or brazed to each other to create a compact thermal management system 110. The heat exchanger module 114 also decreases the number of lines needed to connect the elements of the thermal management system 110.

As discussed in more detail below, the heat exchanger module 114 includes a heat exchanger 118 (e.g., a first heat exchanger) and a chiller 122 (e.g., a second heat exchanger). In the illustrated embodiment, the heat exchanger module 114 further includes a first expansion valve 356, a second expansion valve 360, a check valve 396, and at least one sensor 384. The elements of the heat exchanger module 114 are mounted together in a compact manner, as discussed in more detail below. Although one sensor 384 is shown in FIG. 2, the heat exchanger module 114 may include multiple sensors 384.

The thermal management system 110 includes the heat exchanger module 114, a cabin evaporator 126, a compressor 130, and a condenser 134. In some embodiments, the thermal management system 110 may include more elements. In some embodiments, the thermal management system 110 may contain less elements.

A fluid (e.g., a refrigerant) flows through the thermal management system 110 through lines. As the fluid flows through the thermal management system 110, it changes between a low-pressure state and a high-pressure state. For simplicity, when the fluid is in the low-pressure state, it will be referred to as a "low-pressure fluid," and when the fluid is in the high-pressure state, it will be referred to as a "high-pressure fluid." In the illustrated embodiment, the low-pressure fluid is the same fluid as the high-pressure fluid, but the fluid is just in a different state. In some embodiments, the high-pressure fluid may be a different fluid than the low-pressure fluid.

The components of the thermal management system 110 will be briefly described. The heat exchanger 118 transfers heat from the high-pressure fluid to the low-pressure fluid. The chiller 122 uses the low-pressure fluid to cool a second fluid (e.g., a coolant). The second fluid is used to cool the battery and the power train of the vehicle. The cabin evaporator 126 uses the low-pressure fluid to cool the cabin by cooling an airflow that flows into the cabin. The compressor 130 increases the pressure of the fluid such that the fluid is in a high-pressure vapor state. The condenser 134 cools the fluid from the high-pressure vapor state into a liquid high-pressure state. The condenser 134 may be a fluid (e.g., coolant) condenser and/or a cabin condenser that provides a warm airflow to the cabin. The first and second expansion valves 356, 360 are used to expand the high-pressure fluid into the low-pressure fluid. In some embodiments, the thermal management system 110 incudes a cabin condenser and a fluid condenser arranged in parallel with a control valve to control the flow of the fluid through the condensers.

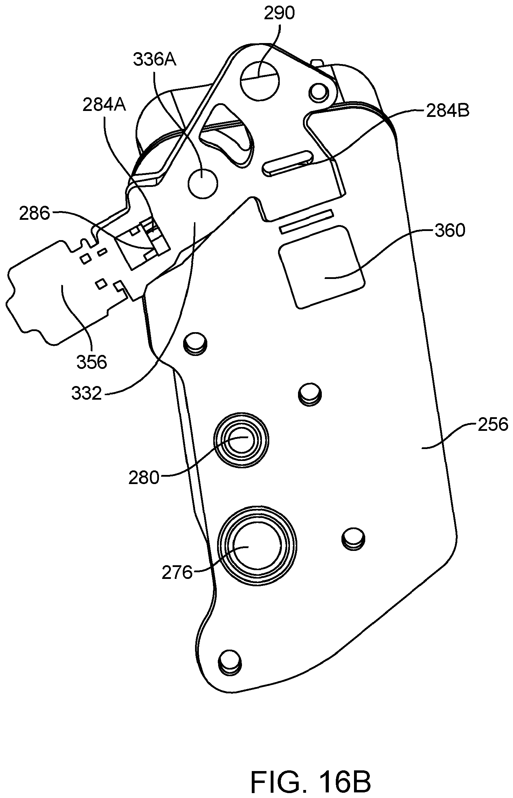

The heat exchanger module 114 is connected to the other elements by lines (e.g., pipes or tubes). A low-pressure inlet line 138 provides fluid communication between the cabin evaporator 126 and the heat exchanger module 114. A low-pressure outlet line 142 provides fluid communication between the heat exchanger module 114, the compressor 130, and the condenser 134. A high-pressure inlet line 150 provides fluid communication between the compressor 130 and the heat exchanger module 114. A high-pressure channel 286 (FIG. 16B) provides fluid communication between the heat exchanger module 114 and the first expansion valve 356 and the second expansion valve 360. A low-pressure line 154 may connect the second expansion valve 360 to the cabin evaporator 126.

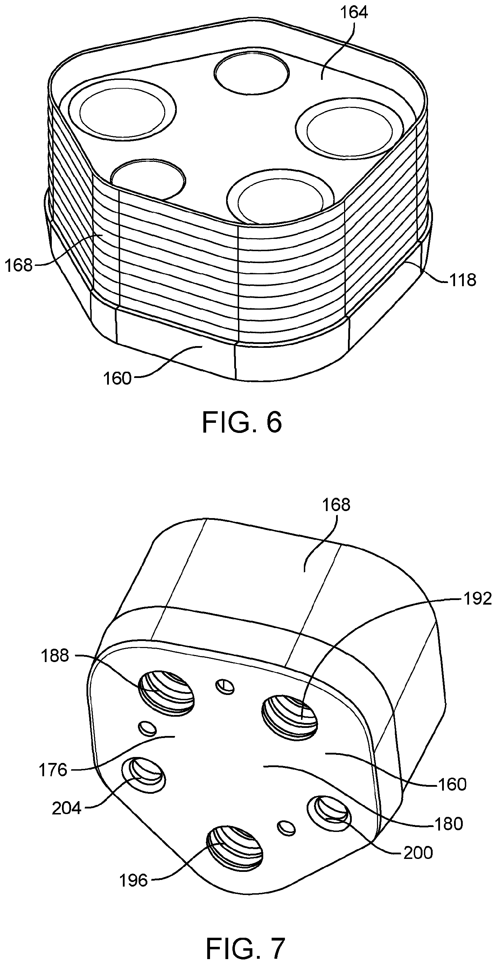

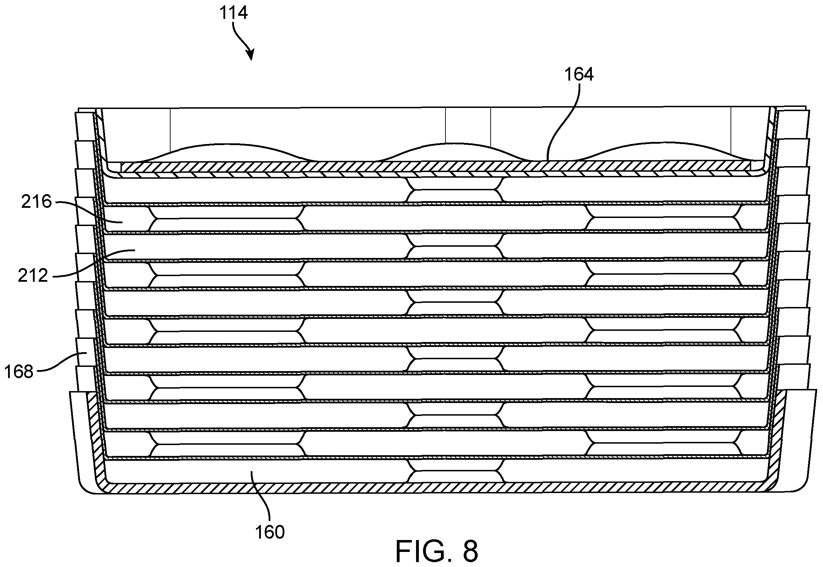

FIGS. 6-8 illustrate the heat exchanger 118. The heat exchanger 118 transfers heat between the low-pressure fluid and the high-pressure fluid. The heat exchanger 118 includes a first end 160 (e.g., a base end), a second end 164 (e.g., a top end), and a stack of plates 168 positioned between the first end 160 and the second end 164.

A portion of the first end 160 is disposed on (e.g., coupled to or mounted to) the chiller 122. More specifically, the first end 160 of the heat exchanger 118 includes a first portion 176 and a second portion 180 with only the first portion 176 of the heat exchanger 118 being disposed on the chiller 122. The first portion 176 of the heat exchanger is coupled to the chiller 122, while the second portion 180 extends past the chiller 122.

Openings are defined on the first end 160 of the heat exchanger 118. The openings allow the fluid to enter and exit the heat exchanger 118. The openings may include a first low-pressure inlet 188, a second low-pressure inlet 192, a low-pressure outlet 196, a high-pressure inlet 200, and a high-pressure outlet 204.

Some of the openings are disposed on (e.g., defined on) the first portion 176 of the first end 160 and some of the openings are disposed on the second portion 180 of the first end 160. More specifically, the first-low pressure inlet 188 and the high-pressure outlet 204 are on the first portion 176 of the first end 160. The second low-pressure inlet 192, the low-pressure outlet 196, and the high-pressure inlet 200 are on the second portion 180 of the first end 160. In some embodiments, some of the openings may be disposed on the second end 164 of the heat exchanger 118.

The first low-pressure inlet 188 supplies the low-pressure fluid to the heat exchanger 118. The low-pressure fluid is from the chiller 122. The second low-pressure inlet 192 supplies the low-pressure fluid to the heat exchanger 118. The low-pressure fluid is from the cabin evaporator 126. The low-pressure outlet 196 dispenses the low-pressure fluid from the heat exchanger 118 to the low-pressure outlet line 142. The high-pressure inlet 200 connects to a high-pressure line 154 to supply the high-pressure fluid to the heat exchanger 118. The high-pressure outlet 204 dispenses the high-pressure fluid from the heat exchanger 118.

The stack of plates 168 form a group of low-pressure passages 212 and a group of high-pressure passages 216. The low-pressure passages 212 allow the low-pressure fluid to flow across the passages. The high-pressure passages 216 allow the high-pressure fluid to flow across the passages. The low-pressure passages 212 are alternately stacked with high-pressure passages 216 such that the high-pressure fluid flowing across the high-pressure passages 216 can transfer heat to the low-pressure fluid flowing across the low-pressure passages 212.

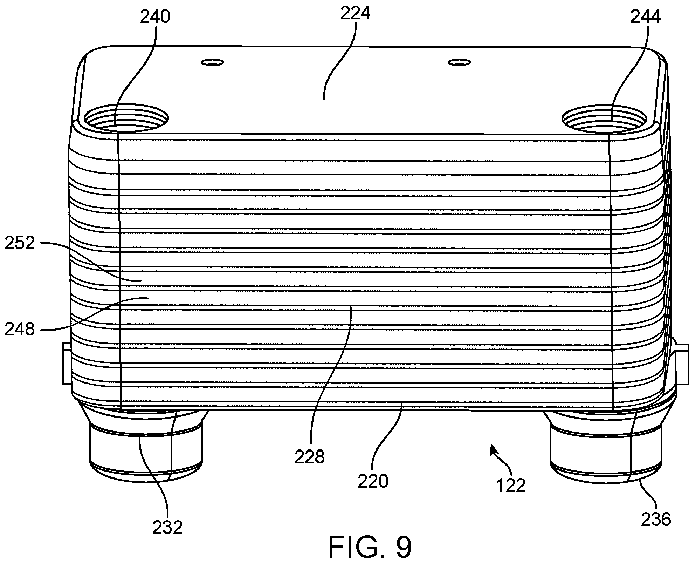

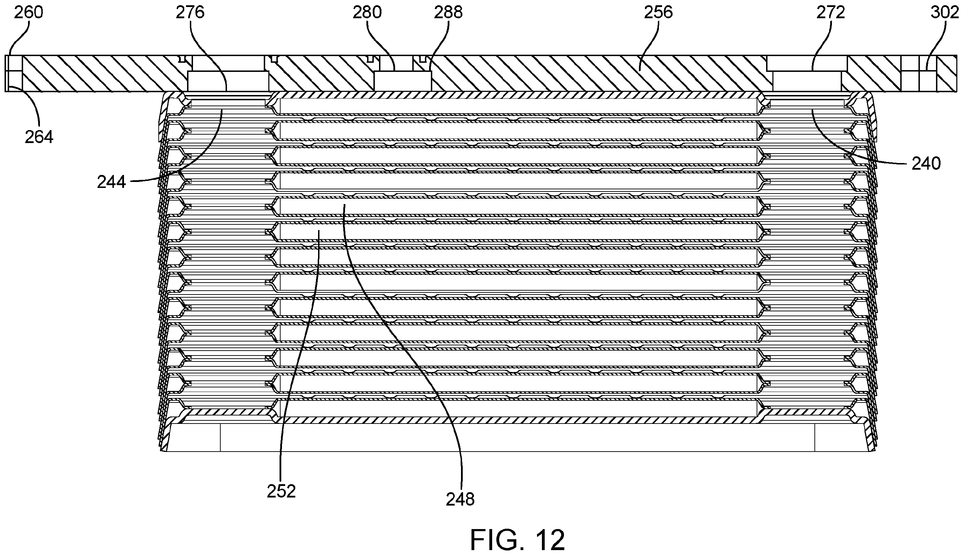

FIGS. 9 and 12 illustrate the chiller 122. The chiller 122 transfers heat between the low-pressure fluid and the second fluid (e.g., a coolant). The heat exchanger 118 includes a first end 220 (e.g., a base end), a second end 224 (e.g., a top end), and a stack of plates 228 positioned between the first end 220 and the second end 224.

The first end 220 of the chiller 122 includes a fluid inlet 232 and a fluid outlet 236. The fluid inlet 232 connects to a fluid supply line to supply the second fluid to the chiller 122. The fluid outlet 236 connects to a fluid outlet line to dispense the second fluid from the chiller 122 to the outlet line.

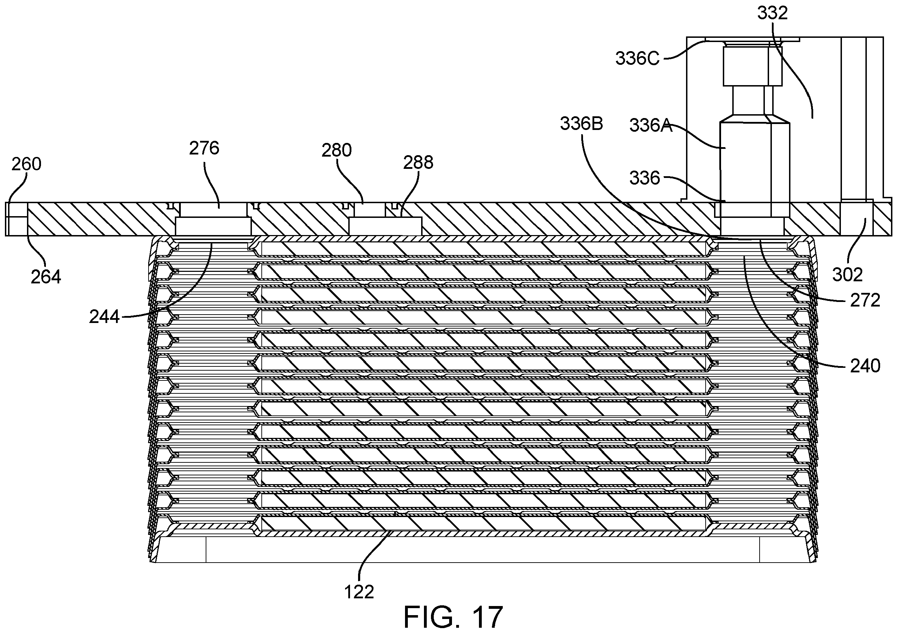

The second end 224 of the chiller 122 includes a low-pressure inlet 240 and a low-pressure outlet 244. The low-pressure inlet 240 connects to a low-pressure channel 336 (FIG. 17) to supply low-pressure fluid to the low-pressure inlet 240 and to the chiller 122. The low-pressure outlet 244 dispenses the low-pressure fluid from the chiller 122.

The low-pressure outlet 244 of the chiller 122 is in fluid communication with the first low-pressure inlet 188 of the heat exchanger 118. The low-pressure outlet 244 supplies the low-pressure fluid to the first low-pressure inlet 188 and the heat exchanger 118. The low-pressure outlet 244 is aligned with the second low-pressure inlet 192. The low-pressure outlet 244 is adjacent the second low-pressure inlet 192. The low-pressure outlet 244 may be concentric with the second low-pressure inlet 192.

With reference to FIG. 12, the stack of plates 228 form a group of low-pressure passages 248 and a group of coolant passages 252. The low-pressure passages 248 allow the low-pressure fluid to flow across the passages. The coolant passages 252 allow the second fluid to flow across the passages. The low-pressure passages 212 are alternately stacked with the coolant passages 252 such that the second fluid flowing across the coolant passages 252 can transfer heat to the low-pressure fluid flowing across the low-pressure passages 212.

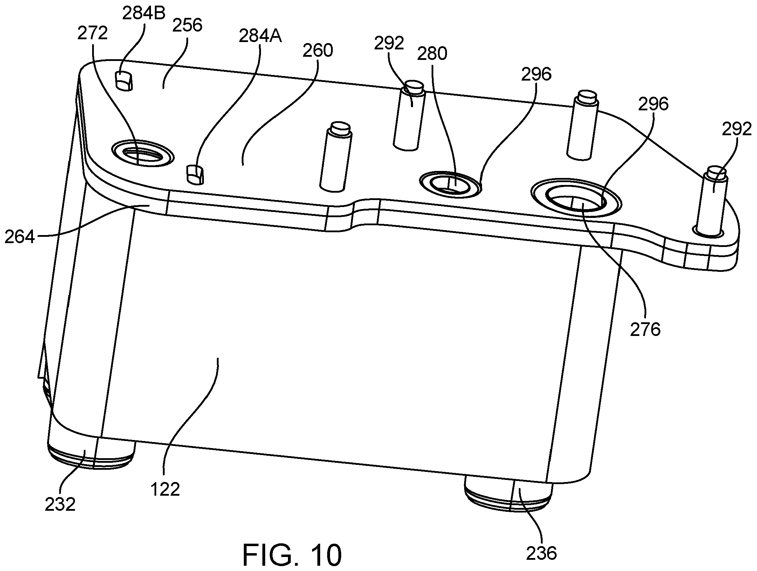

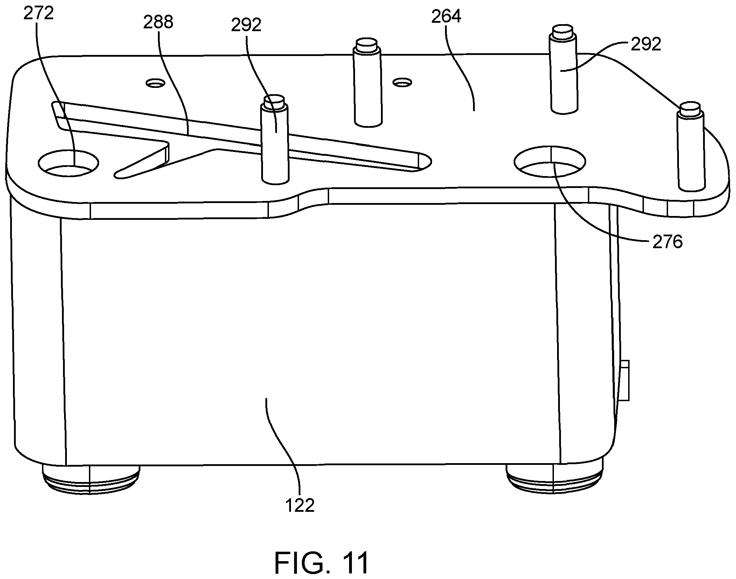

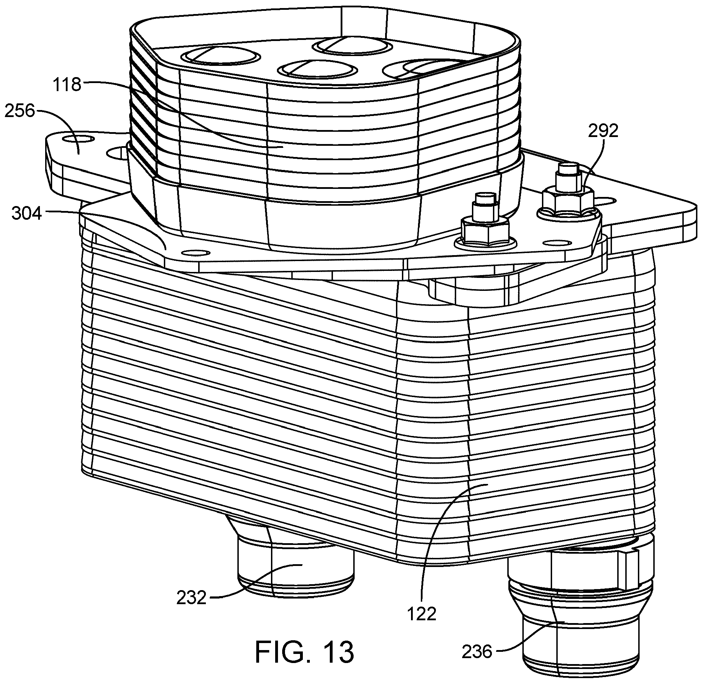

With reference to FIGS 10-15B, the heat exchanger module 114 may include a mounting plate 256 situated between the heat exchanger 118 and the chiller 122. More specifically, a portion of the first end 160 of the heat exchanger 118 is removably coupled to the mounting plate 256, and a portion of the second end 224 of the chiller 122 is coupled to the mounting plate 256. In the illustrated embodiment, the entire second end 224 is mounted to the mounting plate 256. In some embodiments, only a portion of the second end 224 may be coupled to the mounting plate 256. In some embodiments, the mounting plate 256 may extend past the second end 224 of the chiller 122. In some embodiments, the mounting plate 256 may be integrally formed with the chiller 122. In some embodiments, the mounting plate 256 may be removably coupled to the chiller 122.

The mounting plate 256 includes a first plate 260 (e.g., a cover plate), a second plate 264 (e.g., a base plate), a low-pressure inlet 272, a low-pressure outlet 276, and fasteners 292. The first plate 260 is adjacent the first end 160 of the heat exchanger 118 and the second plate 264 is adjacent the chiller 122. The low-pressure inlet 272 and the low-pressure outlet 276 extend through both the first plate 260 and the second plate 264.

The low-pressure inlet 272 provides fluid communication between the low-pressure channel 336 and the low-pressure inlet 240 of the chiller 122. The low-pressure inlet 272 supplies the low-pressure fluid from the low-pressure channel 336 to the low-pressure inlet 240 and to the chiller 122. The low-pressure inlet 272 is aligned with the low-pressure inlet 240. The low-pressure inlet 272 is adjacent the low-pressure inlet 240. The low-pressure inlet 272 is concentric with the low-pressure inlet 240.

The low-pressure outlet 276 provides fluid communication between the low-pressure outlet 244 of the chiller 122 and the first low-pressure inlet 188 of the heat exchanger 118. The low-pressure outlet 276 supplies the low-pressure fluid from the chiller 122 to the first low-pressure inlet 188 and the heat exchanger 118. The low-pressure outlet 276 is aligned with the low-pressure outlet 244 and the first low-pressure inlet 188. The low-pressure outlet 276 is adjacent the low-pressure outlet 244 and the first low-pressure inlet 188. The low-pressure outlet 276 is concentric with the low-pressure outlet 244 and the first low-pressure inlet 188.

The fasteners 292 removably couple the heat exchanger 118 to the mounting plate 256. In some embodiments, the mounting plate 256 may include fasteners that removably couple the chiller 122 to the mounting plate 256.

With reference to FIG. 10-12, the mounting plate 256 may further include a cross-over channel 288. The cross-over channel 288 connects the high-pressure outlet 204 to the high-pressure channel 286. The cross-over channel 288 extends along a portion of the mounting plate 256. More specifically, the cross-over channel 288 is included in the second plate 264 and extends along a portion of the second plate 264. The cross-over channel 288 extends along the mounting plate 256 for a third of the length of the mounting plate 256.

The cross-over channel 288 includes an inlet 280, a first outlet 284A, and a second outlet 284B. The inlet 280 is in fluid communication with the high-pressure outlet 204 of the heat exchanger 118. The high-pressure outlet 204 supplies high-pressure fluid to the inlet 280 and the cross-over channel 288. The inlet 280 is aligned with the high-pressure outlet 204. The inlet 280 is adjacent the high-pressure outlet 204. The inlet 280 is concentric with the high-pressure outlet 204.

The first outlet 284A and the second outlet 284B provide fluid communication between the cross-over channel 288 and the high-pressure channel 286 such that the high-pressure outlet 204 is in fluid communication with the high-pressure channel 286. The first outlet 284A and the second outlet 284B supply high-pressure fluid from the high-pressure outlet 204 of the heat exchanger 118 to the high-pressure channel 286.

There may be a gasket 296 (e.g., an elastomer seal) positioned between the mounting plate 256 and the heat exchanger 118. In the illustrated embodiment, there is a gasket 296 between the mounting plate 256 at the low-pressure outlet 276 and at the inlet 280 of the cross-over channel 288. The gasket 296 prevents leaks between the mounting plate 256 and the heat exchanger 118.

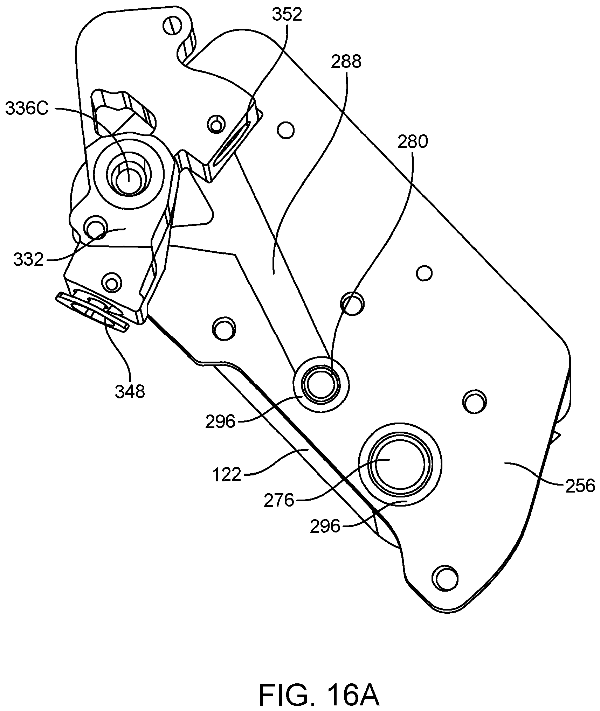

With reference to FIGS. 16A-17, the heat exchanger module 114 includes a valve block 332 coupled to the mounting plate 256. The valve block 332 may include a fastener that is received in a fastener opening 302 of the mounting plate 256 to secure to valve block 332 to the mountain plate 256. In some embodiments, the valve block 332 is brazed to the mounting plate 256.

The valve block 332 includes the high-pressure channel 286, a first mount 348, and a second mount 352. The first mount 348 supports a first expansion valve 356, and the second mount 352 support a second expansion valve 360. The first and second expansion valves 356, 360 may be electronic expansion valves. The first and second expansion valves 356, 360 expand the high-pressure fluid into low-pressure fluid.

The high-pressure channel 286 is in fluid communication with the first expansion valve 356 and the second expansion valve 360. The high-pressure channel 286 provides fluid communication between the cross-over channel 288 and the first and second expansion valves 356, 360. The high-pressure channel 286 provides fluid communication between the high-pressure outlet 204 of the heat exchanger 118 and the first and second expansion valves 356, 360. The high-pressure channel 286 supplies the high-pressure fluid form the high-pressure outlet 204 of the heat exchanger 118 to the first and second expansion valves 356, 360. The high-pressure channel 286 may be partially formed by the first expansion valve 356 and the second expansion valve 360.

The first expansion valve 356 is in fluid communication with the low-pressure channel 336 and supplies the low-pressure fluid to the low-pressure channel 336. The low-pressure channel 336 includes a low-pressure inlet 336A, a low-pressure outlet 336B, and a service port 336C.

The low-pressure inlet 336A is fluidly connected to the first expansion valve 356. The low-pressure outlet 336B is in fluid communication with the low-pressure inlet 240 of the chiller 122. The low-pressure outlet 336B supplies the low-pressure fluid from the first expansion valve 356 to the low-pressure inlet 240 of the chiller 122. The low-pressure outlet 336B is aligned with the low-pressure inlet 240. The low-pressure outlet 336B is adjacent the low-pressure inlet 240. The low-pressure outlet 336B is concentric with the low-pressure inlet 240.

The service port 336C is opposite the low-pressure outlet 336B. In the illustrated embodiment, the service port 336C is fluidly connected to the low-pressure channel 336 of the heat exchanger module 114. The service port 336C allows a user or a mechanic to inspect the low-pressure channel 336, the chiller 122, and the heat exchanger module 114.

The second expansion valve 360 is in fluid communication with a low-pressure channel 290. The low-pressure channel 290 dispenses the low-pressure fluid from the heat exchanger module 114. The low-pressure channel 290 connects to the low-pressure line 154 to supply the low-pressure fluid to low-pressure line 154.

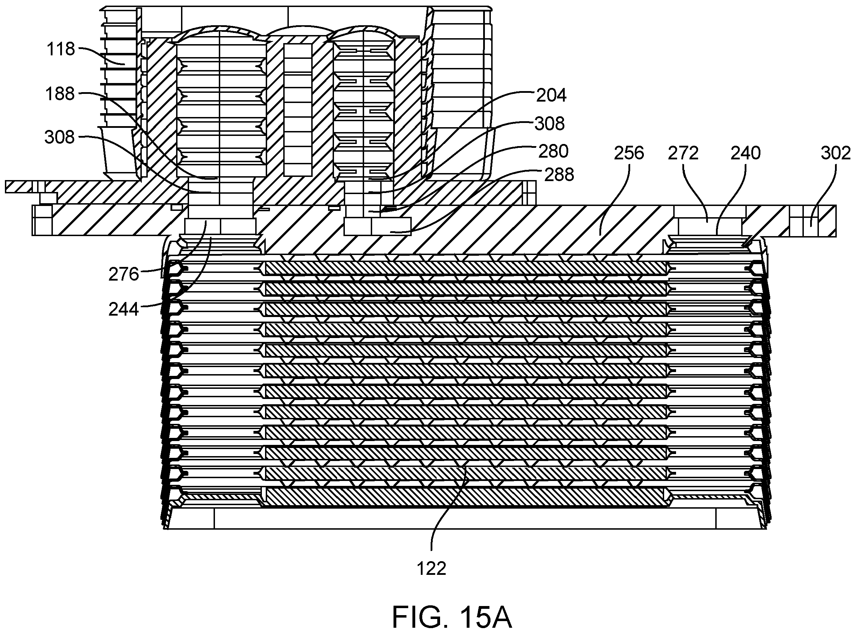

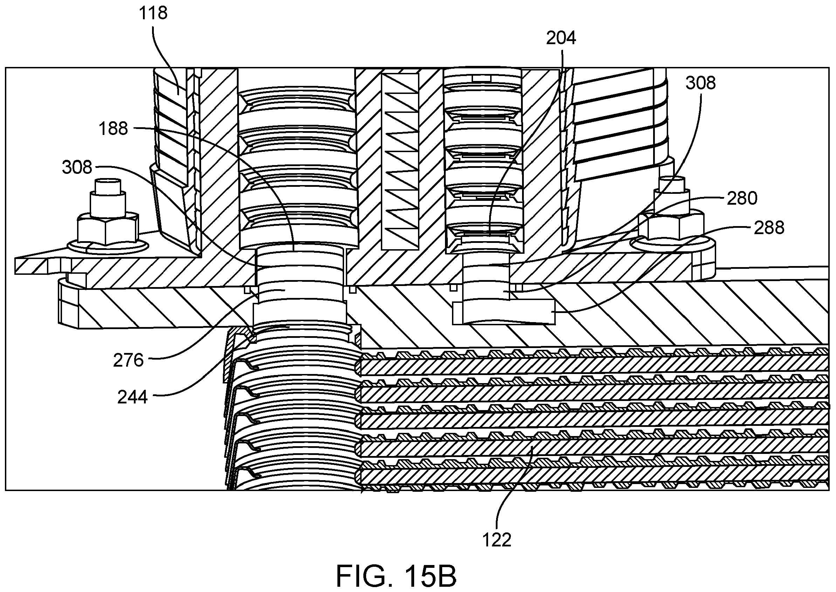

Turning to FIGS. 15A-15B, the heat exchanger module 114 may include a support plate 304 that is situated between the mounting plate 256 and the heat exchanger 118. The support plate 304 is removably coupled to the heat exchanger 118 and the mounting plate 256. The support plate 304 allows elements to be coupled to the heat exchanger 118. The support plate 304 includes openings 308 (FIGS. 15A-15B) that align with the openings in the heat exchanger 118.

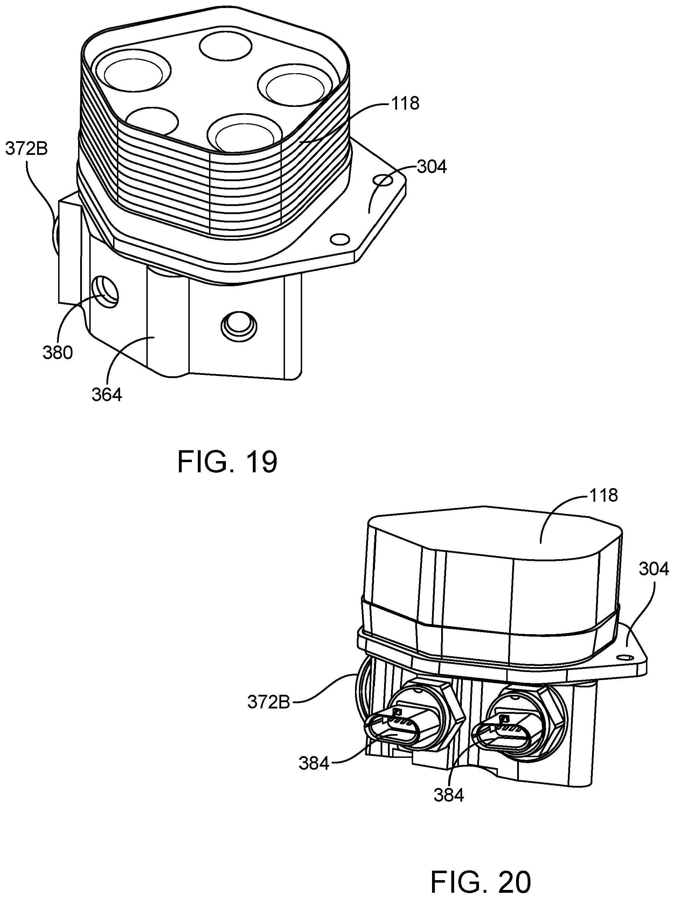

With reference to FIGS. 19-24, the heat exchanger module 114 may include a fitting block 364 coupled to the heat exchanger 118. The fitting block 364 includes a low-pressure inlet passage 368, a low-pressure outlet passage 372, and a high-pressure inlet passage 376. The fitting block 364 may be brazed to the mounting plate 256.

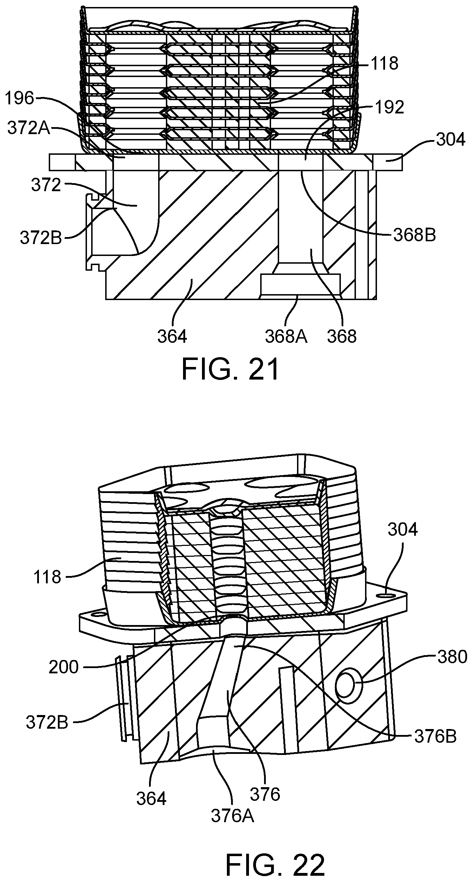

With reference to FIG. 21, the low-pressure inlet passage 368 includes an inlet 368A and an outlet 368B. The inlet 368A connects to the low-pressure inlet line 138. The outlet 368B is in fluid communication with the second low-pressure inlet 192 of the heat exchanger 118. The outlet 368B is aligned with and is adjacent to the second low-pressure inlet 192 of the heat exchanger 118. The low-pressure inlet passage 368 supplies the low-pressure fluid from the cabin evaporator 126 to the second low-pressure inlet 192 and to the heat exchanger module 1114.

With continued reference to FIG. 21, the low-pressure outlet passage 372 includes an inlet 372A and an outlet 372B. The inlet 372A is in fluid communication with the low-pressure outlet 196 of the heat exchanger 118. The inlet 372A is aligned with and is adjacent to the low-pressure outlet 196 of the heat exchanger 118. The outlet 372B connects to the low-pressure outlet line 142. The low-pressure outlet passage 372 dispenses the low-pressure fluid from the heat exchanger 118 to the low-pressure outlet line 142. In some embodiments, the outlet 372B can be directly mounted to an inlet of the compressor 130 to eliminate additional piping and to form an even more compact arrangement. If the outlet 372B is directly mounted to an inlet of the compressor 130, the outlet line 142 may be the inlet of the compressor 130.

With reference to FIG. 22, the high-pressure inlet passage 376 includes an inlet 376A and an outlet 376B. The inlet 376A connects to the high-pressure inlet line 150. The outlet 376B is in fluid communication with the high-pressure inlet 200 of the heat exchanger 118. The outlet 376B is aligned with and is adjacent the high-pressure inlet 200. The high-pressure inlet passage 376 supplies the high-pressure fluid to the high-pressure inlet 200 and the heat exchanger 1118. In some embodiments, the chiller 122 can be directly mounted to the condenser 134 such that the inlet 376A is directly mounted to the outlet of a condenser 134 and the additional piping high-pressure line 150 is not needed. If the inlet 376A is directedly mounted to the outlet of the condenser 134, the high-pressure line 150 may be the outlet of the condenser 134.

With reference to FIG. 21, the low-pressure inlet passage 368 includes an inlet 368A and an outlet 368B. The inlet 368A connects to the low-pressure inlet line 138. The outlet 368B connects to the second low-pressure inlet 192 of the heat exchanger 118. The outlet 368B is aligned with and is adjacent to the second low-pressure inlet 192 of the heat exchanger 118. The low-pressure inlet passage 368 supplies the low-pressure fluid from the cabin evaporator 126 to the second low-pressure inlet 192 and the heat exchanger module 1114.

The fitting block 364 may include sensor receiving locations 380. The sensors receiving locations 380 support a sensor 384 such that the sensor 384 is mounted to the heat exchanger 114. The sensor 384 may be a pressure sensor, a temperature sensor, or a pressure-temperature sensor.

The illustrated embodiment includes a sensor 384 in fluid communication with the low-pressure outlet 196 such that the sensor 384 can measure the low-pressure fluid flowing along the low-pressure outlet passage 372. The illustrated embodiment also includes a sensor 384 in fluid communication with the high-pressure inlet 200 such that the sensor 384 can measure the high-pressure fluid flowing along the high-pressure inlet passage 376.

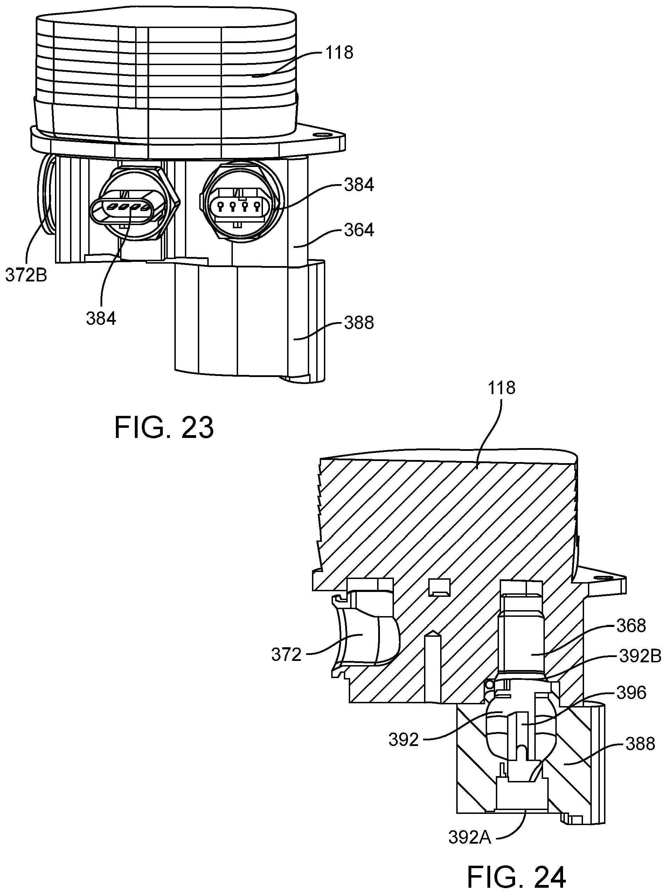

With continued reference to FIG. 24, the heat exchanger module 114 may include a second valve block 388 coupled to the fitting block 364. The second valve block 388 includes a low-pressure passage 392. The low-pressure passage 392 includes an inlet 392A and an outlet 392B. The inlet 392A connects to the low-pressure inlet line 138 and the outlet 392B is in fluid communication with the inlet 368A of the low-pressure inlet passage 368 of the fitting block 364. The low-pressure passage 392 supplies the low-pressure fluid from the cabin evaporator 126 to the low-pressure inlet passage 368 of the fitting block 364 and the second low-pressure inlet 192 of the heat exchanger 118.

The low-pressure passage 392 includes a check valve 396. The check valve 396 prevents the low-pressure fluid from flowing from the heat exchanger 118 and the heat exchanger module 114 backward to the low-pressure inlet line 138. The check valve 396 also prevents fluid from accumulating in the low-pressure inlet line 138.

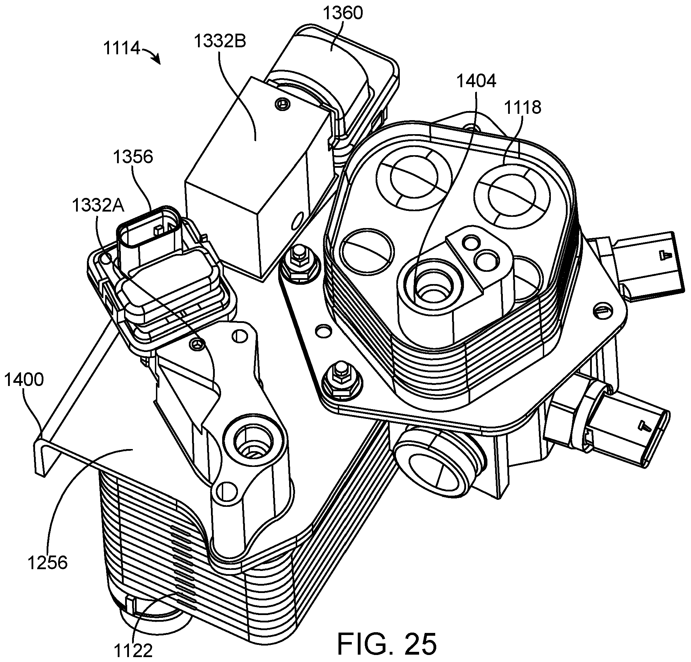

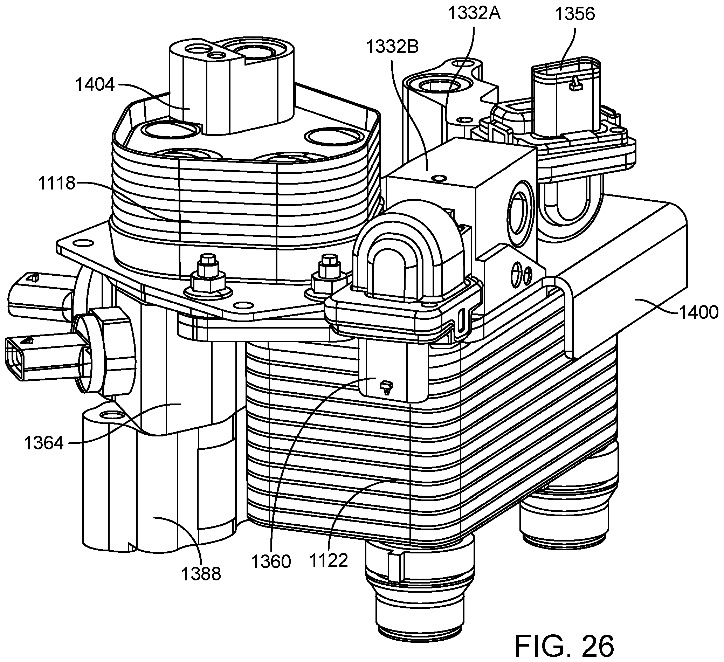

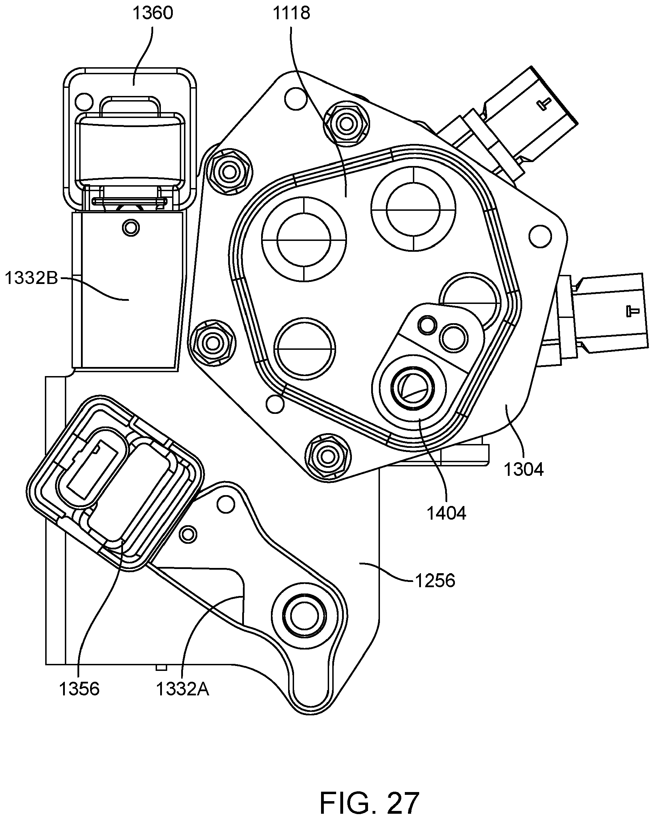

FIGS. 25-31 illustrate another embodiment of a heat exchanger module 1114. Many features of the heat exchanger module 1114 are similar to those discussed above with regard to the first embodiment of the heat exchanger module 114. As such, many of these features will not be discussed again below. Features similar to those discussed above will be labeled with a reference number that is a value of one thousand higher than the corresponding feature discussed above.

The heat exchanger module 1114 includes a heat exchanger 1118 (e.g., a first heat exchanger) mounted to (e.g., disposed on) a chiller 1122 (e.g., a second heat exchanger). The heat exchanger module 114 is used with the thermal management system 10.

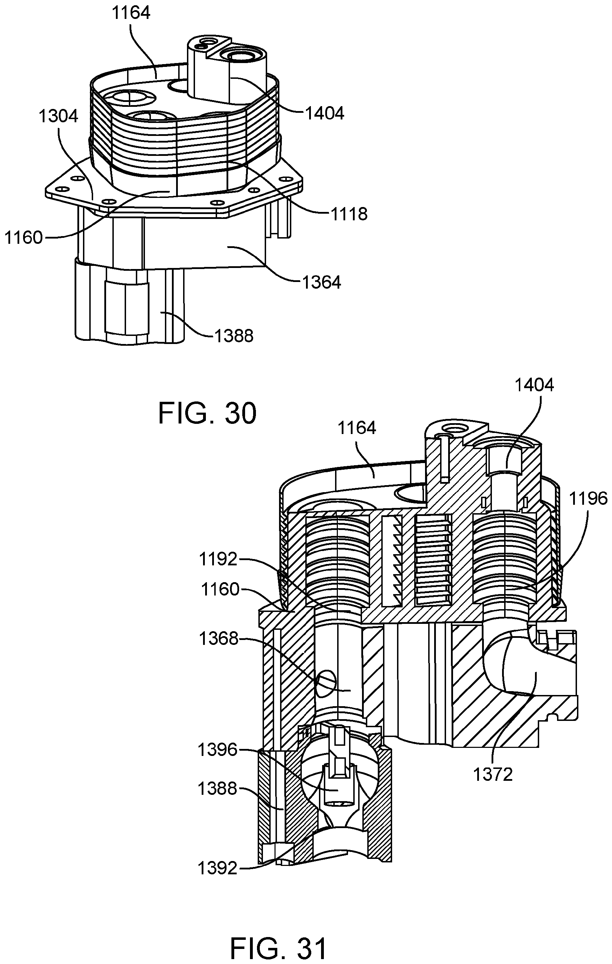

With reference to FIGS. 30-31, the heat exchanger 1118 includes a first end 1160 and a second end 1164. A first low-pressure inlet (not shown), a second low-pressure inlet 1192, a low-pressure outlet 1196, a high-pressure inlet (not shown), and a high-pressure outlet (not shown) are disposed on the first end of the heat exchanger 1118.

The heat exchanger 1118 further includes a service port 1404 or at least a connection to a servicing device. The service port 1404 is disposed on the second end 1164 of the heat exchanger 1118. In the illustrated embodiment, the service port 1404 is fluidly connected to the low-pressure outlet 1196 of the heat exchanger 1118. The service port 1404 allows a user or a mechanic to inspect the low-pressure outlet 1196, the heat exchanger 1118, and the heat exchanger module 1114, and to drain and fill the system during servicing events.

The chiller 1122 includes a low-pressure inlet (not shown) and a low-pressure outlet (not shown). The low-pressure outlet is in fluid communication to the first low-pressure inlet of the heat exchanger 1118 such that the low-pressure fluid can flow from the low-pressure outlet of the chiller 1122 to the low-pressure inlet of the heat exchanger 1118. The low-pressure outlet of the chiller 1122 is also aligned with the low-pressure inlet of the heat exchanger 1118.

The heat exchanger module 1114 further includes a mounting plate 1256 coupled to the chiller 1122 and the heat exchanger 1118 such that the heat exchanger 1118 is mounted to the chiller 1122 via the mounting plate 1256.

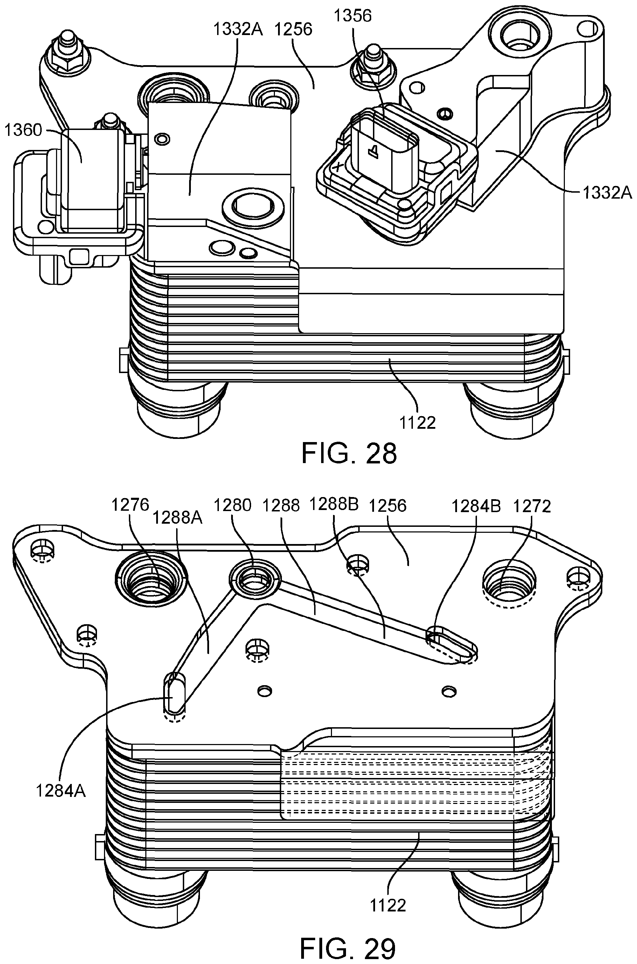

With reference to FIG. 29, the mounting plate 1256 includes openings that are aligned with some of the openings in the heat exchanger 1118 and with some of the openings in the chiller 1122. The mounting plate 1256 includes a low-pressure inlet 1272, a low-pressure outlet 1276, and a cross-over channel inlet 1280. The low-pressure inlet 1272 is aligned with the low-pressure inlet of the chiller 1122 such that the low-pressure fluid can flow through the mounting plate 1256 into the chiller 1122. The low-pressure outlet 1276 is aligned with the low-pressure outlet of the chiller 1122 and with the first low-pressure inlet of the heat exchanger 1118. The low-pressure outlet 1276 provides fluid communication between the low-pressure outlet of the chiller 1122 and the low-pressure inlet of the heat exchanger 1118 such that the low-pressure fluid can flow from the low-pressure outlet of the chiller 1122 to the low-pressure inlet of the heat exchanger 1118. The cross-over channel inlet 1280 is aligned with the high-pressure outlet of the heat exchanger 1118.

The mounting plate 1256 further includes a cross-over channel 1288. The cross-over channel 1288 includes the cross-over channel inlet 1280 a first cross-over channel outlet 1284A, and a second cross-over channel outlet 1284B. A first branch 1288A connects the cross-over channel inlet 1280 to the first cross-over channel outlet 1284A. A second branch 1288B connects the cross-over channel inlet 1280 and the second cross-over channel outlet 1284B. The first branch 1288A extends partially across the mounting plate 1256 in a first direction, and the second branch 1288B extends partially across the mounting plate 1256 in a second, opposite direction.

With reference to FIG. 28, the heat exchanger module 1114 includes a first valve block 1332A coupled to the mounting plate 1256. A first expansion valve 1356 (e.g., an electronic expansion valve) is coupled to the first valve block 1332A. The first valve block 1332A and the first expansion valve 1356 are fluidly connected to the high-pressure outlet of the heat exchanger 1118 by the channel 1288. The first expansion valve 1356 and the first valve block 1332A form part of a channel that is fluidly connected to the high-pressure outlet of the heat exchanger 1118.

The first valve block 1332A and the first expansion valve 1356 are also fluidly connected to the low-pressure inlet 1272 of the chiller 1122. The first valve block 1332A includes an opening that is aligned with and adjacent to the low-pressure inlet 1272 of the chiller 1122. The first expansion valve 1356 receives the high-pressure fluid from the high-pressure outlet of the heat exchanger 1118, compress the high-pressure fluid into a low-pressure fluid, and supply the low-pressure fluid to the low-pressure inlet 1272 of the chiller 1122.

The heat exchanger module 1114 includes a second valve block 1332B coupled to the mounting plate 1256 and a second expansion valve 1360. The second valve block 1332B is separate and spaced from the first valve block 1332A. The second valve block 1332B and the second expansion valve 1360 are fluidly connected to the high-pressure outlet of the heat exchanger 1118 by the channel 1288. The second expansion valve 1360 and the second valve block 1332B form part of a channel that is fluidly connected to the high-pressure outlet of the heat exchanger 1118.

The second valve block 1332B and the second expansion valve 1360 are connected to a discharge line. The discharge line may be connected to a cabin evaporator. The second expansion valve 1360 receives high-pressure fluid from the outlet of the heat exchanger 1118, compress the high-pressure fluid into a low-pressure fluid, and supply the low-pressure fluid to the line.

The mounting plate 1256 may include a flange 1400. The flange 1400 overhangs a portion of the chiller 1122. The flange 1400 decreases the pressure concentration on the mounting plate 1256. The flange 1400 also can be used to mount the heat exchanger module 1114 to an additional element. In some embodiments, the flange 1400 extends around the sides of the chiller 1122.

The heat exchanger module 1114 may include a support plate 1304 that is situated between the mounting plate 1256 and the heat exchanger 1118. The support plate 1304 is removably coupled to the heat exchanger 1118 and the mounting plate 1256. The support plate 1304 allows elements to be coupled to the heat exchanger 1118. The support plate 1304 includes openings that align with the openings in the heat exchanger 1118.

With reference to FIGS. 30-31, the heat exchanger module 1114 may include a fitting block 1364 coupled to the heat exchanger 1118. The fitting block 1364 is in fluid communication with the heat exchanger 1118. More specifically, the fitting block 1364 includes a low-pressure inlet passage 1368 and a low-pressure outlet passage 1372. The fitting block 1364 may also include a high-pressure inlet passage (not shown).

The low-pressure inlet passage 1368 is in fluid communication with the second low-pressure inlet 1192 of the heat exchanger 1118. The low-pressure inlet passage 1368 connects to the low-pressure inlet line to supply the low-pressure fluid to the second low-pressure inlet 1192 and the heat exchanger 1118.

The low-pressure outlet passage 1372 is in fluid communication with the low-pressure outlet 1196. The low-pressure outlet passage 1372 connects to the low-pressure outlet line to dispense the low-pressure fluid from the heat exchanger 1118 to the low-pressure outlet line. The service port 1404 may also be in fluid communication with the low-pressure outlet passage 1372.

With continued reference to FIG. 31, the heat exchanger module 1114 may include a valve block 1388 coupled to the fitting block 1364. The valve block 1388 includes a check valve 1396 disposed in low-pressure channel 1392. The low-pressure channel 1392 is in fluid communication with the low-pressure inlet passage 1368 of the fitting block 1364. The low-pressure channel 1392 connects to the low-pressure inlet line to supply the low-pressure fluid to the low-pressure inlet passage 1368 and to the second low-pressure inlet 1192 of the heat exchanger 1118.

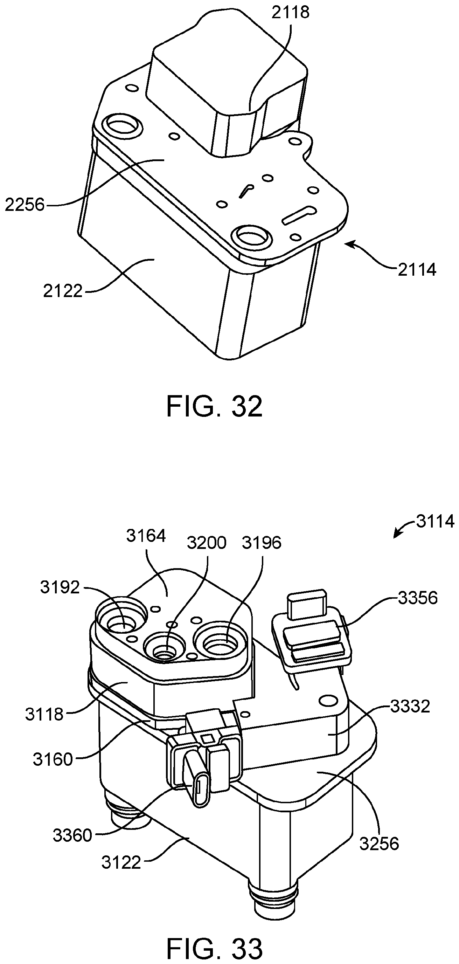

FIG. 32 illustrates another embodiment of a heat exchanger module 2114. Many features of the heat exchanger module 2114 are similar to those discussed above with regard to the first embodiment of the heat exchanger module 114. As such, many of these features will not be discussed again below. Features similar to those discussed above will be labeled with a reference number that is a value of two thousand higher than the corresponding feature discussed above.

The heat exchanger module 2114 includes a heat exchanger 2118, a chiller 2122, and a mounting plate 2256 disposed between the heat exchanger 2118 and the chiller 2122. Unlike the heat exchanger module 114 where the heat exchanger 2118 is removably fastened to the mounting plate 2256 with fasteners 292, the heat exchanger 2118 is directly brazed to the mounting plate 2256. The chiller 2122 may also be directly brazed to the mounting plate 2256.

The heat exchanger module 2114 does not require additional seals (e.g., gaskets) between the heat exchanger 2118 and the mounting plate 2256. The heat exchanger module 2114 also decreases leaks between the heat exchanger 2118 and the mounting plate 2256. Additionally, the heat exchanger module 2114 decreases the assembly time and the steps used in assembling the heat exchanger module 2114.

FIG. 33 illustrates another embodiment of a heat exchanger module 3114. Many features of the heat exchanger module 3114 are similar to those discussed above with regard to the first embodiment of the heat exchanger module 114. As such, many of these features will not be discussed again below. Features similar to those discussed above will be labeled with a reference number that is a value of three thousand higher than the corresponding feature discussed above.

The heat exchanger module 3114 includes a heat exchanger 3118, a chiller 3122, and a mounting plate 3256 positioned between the heat exchanger 3118 and the chiller 3122. The heat exchanger 3118 includes a first end 3160 and a second end 3164 opposite the first end 3160. The first end 3160 is mounted onto (e.g., disposed on) the mounting plate 3256. The first end 3160 of the heat exchanger 3118 includes a first low-pressure inlet (not shown) and a high-pressure outlet (not shown). The second end 3164 includes a second low-pressure inlet 3192, a low-pressure outlet 3196, and a high-pressure inlet 3200.

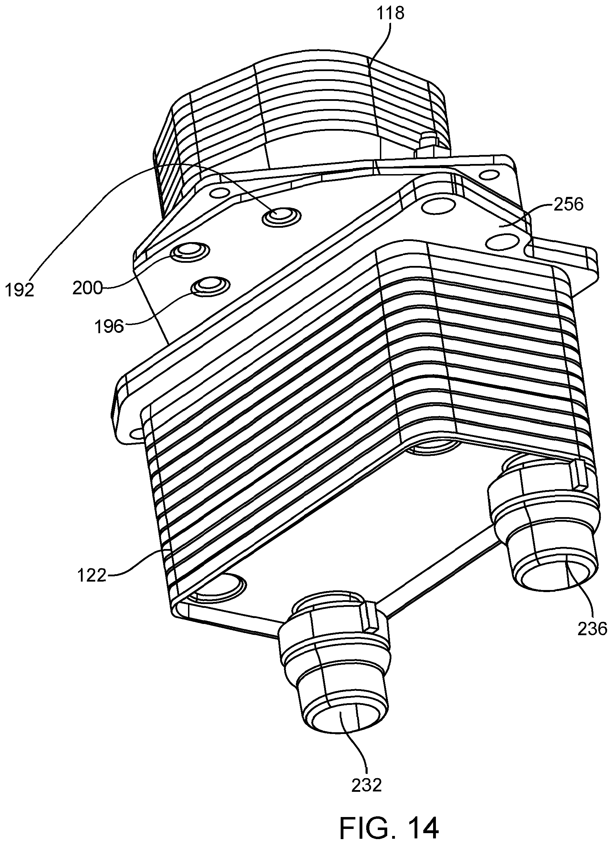

The heat exchanger 118 of the heat exchanger module 114 is offset from the mounting plate 256 (FIG. 14), while the heat exchanger 3118 of the heat exchanger module 3114 is in line with the mounting plate 3256. The second portion 180 of the first end 160 of the heat exchanger 118 is not disposed on the mounting plate 256, while the heat exchanger 3118 of the heat exchanger module 3114 has the entire first end 3160 is disposed on and mounted to the mounting plate 3256.

The heat exchanger module 3114 may further include a valve block 3332, a first expansion valve 3356, and a second expansion valve 3360 mounted to (e.g., disposed on) the mounting plate 3256.

Various additional features and advantages of the invention are set forth in the following claims.

## Claims

1. A heat exchanger module comprising:
a first heat exchanger configured to transfer heat between a high-pressure fluid and a low-pressure fluid, the first heat exchanger having
a low-pressure inlet configured to supply the low-pressure fluid to the first heat exchanger,
a low-pressure outlet configured to connect to a low-pressure outlet line to dispense the low-pressure fluid from the first heat exchanger to a low-pressure outlet line,
a high-pressure inlet configured to connect to a high-pressure line to supply the high-pressure fluid to the first heat exchanger, and
a high-pressure outlet configured to dispense the high-pressure fluid from the first heat exchanger;
a second heat exchanger in fluid communication with the first heat exchanger and operable to transfer heat between the low-pressure fluid and a second fluid flowing through the second heat exchanger, the second heat exchanger having
a low-pressure inlet configured to connect to a low-pressure channel to supply the low-pressure fluid to the low-pressure inlet, and
a low-pressure outlet configured to dispense the low-pressure fluid from the second heat exchanger; and
a mounting plate coupled to the first heat exchanger and the second heat exchanger, the mounting plate including an opening, the opening providing fluid communication between the low-pressure outlet of the second heat exchanger and the low-pressure inlet of the first heat exchanger,
wherein the mounting plate further includes a cross-over channel extending along a portion of the mounting plate, the cross-over channel configured to connect the high-pressure outlet of the first heat exchanger to a high-pressure channel to dispense the high-pressure fluid from the first heat exchanger.

2. The heat exchanger module of claim 1, wherein:
the mounting plate is integrally formed with the second heat exchanger, and
the first heat exchanger is removably coupled to the mounting plate,
further including an elastomer seal positioned between the mounting plate and the first heat exchanger.

3. The heat exchanger module of claim 1, wherein:
the mounting plate further includes a first plate and a second plate,
the first plate is adjacent the first heat exchanger,
the second plate is adjacent the second heat exchanger, and
wherein the second plate includes the cross-over channel.

4. The heat exchanger module of any one of the preceding claims, wherein the cross-over channel extends along the mounting plate for at least a third of a length of the mounting plate.

5. The heat exchanger module of any one of the preceding claims, further comprising a valve block coupled to the mounting plate and an expansion valve coupled to the valve block, wherein the expansion valve forms at least part of the high-pressure channel, and wherein the cross-over channel and the valve block provide fluid communication between the expansion valve and the high-pressure outlet of the first heat exchanger; and/or the expansion valve is in fluid communication with the low-pressure inlet of the second heat exchanger, the expansion valve is configured to supply the low-pressure fluid to the low-pressure inlet of the second heat exchanger.

6. The heat exchanger module of claim 5, further comprising a second expansion valve coupled to the valve block, the second expansion valve is configured to connect to a line to dispense the low-pressure fluid from the heat exchanger module; and/or the cross-over channel includes an inlet, a first outlet, and a second outlet, the inlet is connected to the high-pressure outlet of the first heat exchanger, the first outlet is connected to the expansion valve, and the second outlet is connected to the second expansion valve.

7. The heat exchanger module of any one of the preceding claims, wherein:
the first heat exchanger includes a first end and a second end,
the low-pressure inlet of the first heat exchanger and the high-pressure outlet of the first heat exchanger are defined on the first end of the first heat exchanger,
the low-pressure outlet of the first heat exchanger and the high-pressure inlet of the first heat exchanger are defined on the second end of the first heat exchanger, and
the first end of the first heat exchanger is adjacent the mounting plate.

8. The heat exchanger module of any one of the preceding claims, wherein:
the first heat exchanger includes a first end having a first portion and a second portion,
the low-pressure inlet of the first heat exchanger and the high-pressure outlet of the first heat exchanger are defined on the first portion of the first end,
the low-pressure outlet of the first heat exchanger and the high-pressure inlet of the first heat exchanger are defined on the second portion of the first end, and
only the first portion of the first end is disposed on to the mounting plate.

9. A heat exchanger module comprising:
a first heat exchanger configured to transfer heat between a high-pressure fluid and a low-pressure fluid, the first heat exchanger having
a low-pressure inlet configured to supply the low-pressure fluid to the first heat exchanger,
a low-pressure outlet configured to connect to a low-pressure outlet line to dispense the low-pressure fluid from the first heat exchanger to a low-pressure outlet line,
a high-pressure inlet configured to connect to a high-pressure inlet line to supply the high-pressure fluid to the first heat exchanger, and
a high-pressure outlet configured to dispense the high-pressure fluid from the first heat exchanger; and
a second heat exchanger in fluid communication with the first heat exchanger and operable to transfer heat between the low-pressure fluid and a second fluid flowing through the second heat exchanger, the second heat exchanger having
a low-pressure inlet configured to connect to a low-pressure channel to supply the low-pressure fluid to the low-pressure inlet, and
a low-pressure outlet in fluid communication with the low-pressure inlet of the first heat exchanger,
wherein the first heat exchanger is disposed on the second heat exchanger,
wherein the low-pressure inlet of the first heat exchanger and the low-pressure outlet of the second heat exchanger are aligned with each other.

10. The heat exchanger module of claim 9, wherein the low-pressure inlet of the first heat 1 and the low-pressure outlet of the second heat exchanger are adjacent to each other.

11. The heat exchanger module of claim 9 or 10, further comprising a mounting plate coupled to the first heat exchanger and the second heat exchanger, the mounting plate including an opening, the opening provides fluid communication between the low-pressure inlet of the first heat exchanger and the low-pressure outlet of the second heat exchanger and/or the low-pressure inlet of the first heat exchanger, the low-pressure outlet of the second heat exchanger, and the opening of the mounting plate are aligned and/or the low-pressure inlet of the first heat exchanger, the low-pressure outlet of the second heat exchanger, and the opening of the mounting plate are concentric.

12. The heat exchanger module of claim 11, further comprising a cross-over channel extending along a portion of the mounting plate, the cross-over channel configured to connect the high-pressure outlet of the first heat exchanger to a high-pressure channel to dispense the high-pressure fluid from the first heat exchanger, the cross-over channel having an inlet and outlet and/or the inlet of the cross-over channel is aligned with the high-pressure outlet of the first heat exchanger and/or the inlet of the cross-over channel is adjacent the high-pressure outlet of the first heat exchanger.

13. The heat exchanger module of any one of the claims 9-12, wherein:
the first heat exchanger includes a first end having a first portion and a second portion,
the low-pressure inlet of the first heat exchanger and the high-pressure outlet of the first heat exchanger are defined on the first portion of the first end,
the low-pressure outlet of the first heat exchanger and the high-pressure inlet of the first heat exchanger are defined on the second portion of the first end; and
only the first portion of the first end is disposed on the second heat exchanger.

14. The heat exchanger module of claim 13, further comprising a valve block coupled to the second heat exchanger and an expansion valve coupled to the valve block, wherein the expansion valve forms at least a portion a high-pressure channel, wherein the expansion valve is in fluid communication with the low-pressure inlet of the second heat exchanger, and wherein the expansion valve is configured to supply the low-pressure fluid to the low-pressure inlet of the second heat exchanger and/or further comprising a sensor configured to connect to the low-pressure outlet line, wherein the sensor is mounted to the first heat exchanger.

15. The heat exchanger module of any one of the preceding claims, wherein the low-pressure outlet line is an inlet to a compressor.
